# FASCICULE DE BREVET EUROPEEN

(11) **EP 2 864 891 B1**
(45) Date de publication et mention de la délivrance du brevet: **25.09.2019**
(21) Numéro de dépôt: 13744602.7
(22) Date de dépôt: 21.06.2013
(51) Int. Cl.: G06F 12/0813, G06F 12/0817, G06F 12/0811, G06F 9/46, G06F 11/34, G06F 12/084

(54) **SYSTEME ET PROCEDE DE TRAITEMENT DE DONNEES A GESTION D'UNE COHERENCE DE CACHES DANS UN RESEAU DE PROCESSEURS MUNIS DE MEMOIRES CACHES**
DATENVERARBEITUNGSSYSTEM UND -VERFAHREN MIT VERWALTUNG DER KONSISTENZ VON SPEICHERN IN EINEM NETZWERK VON MIT CACHE-SPEICHERN AUSGESTATTETEN PROZESSOREN
SYSTEM AND METHOD FOR PROCESSING DATA WITH MANAGEMENT OF A CONSISTENCY OF CACHES IN A NETWORK OF PROCESSORS FURNISHED WITH CACHE MEMORIES

(30) Priorité: 22.06.2012 FR 1255923
(43) Date de publication de la demande: 29.04.2015
(73) Titulaire: Commissariat à l'Énergie Atomique et aux Énergies Alternatives, 75015 Paris (FR); Bull S.A.S., 78340 Les Clayes-sous-Bois (FR)
(72) Inventeur: BERNARD, Christian, F-38960 Saint Etienne de Crossey (FR); GUTHMULLER, Eric, F-38300 Ruy (FR); NGUYEN, Huy Nam, F-94260 Fresnes (FR)
(74) Mandataire: Bonnet, Michel
(86) Numéro de dépôt international: PCT/FR2013/051452
(87) Numéro de publication internationale: WO 2013/190247

(56) Documents cités:
- WO-A1-98/11488
- US-A1- 2006 059 315
- US-A1- 2009 006 769
- US-B1- 6 868 481
- MARQUARDT D E ET AL: "A CACHE-COHERENT, DISTRIBUTED MEMORY MULTIPROCESSOR SYSTEM AND ITS PERFORMANCE ANALYSIS*", IEICE TRANSACTIONS ON INFORMATION AND SYSTEMS, INFORMATION & SYSTEMS SOCIETY, TOKYO, JP, vol. E75 - D, no. 3, 1 mai 1992 (1992-05-01), pages 274-290, XP000307362, ISSN: 0916-8532
- NOEL EISLEY ET AL: "In-Network Cache Coherence", MICROARCHITECTURE, 2006. MICRO-39. 39TH ANNUAL IEEE/ACM INTERNATIONAL SYMPOSIUM ON, IEEE, PI, 1 décembre 2006 (2006-12-01), pages 321-332, XP031034181, ISBN: 978-0-7695-2732-1

## Description

La présente invention concerne un système de traitement de données à gestion d'une cohérence de caches dans un réseau de processeurs munis de mémoires caches. Elle concerne également un procédé et un programme d'ordinateur correspondants.

Une mémoire cache est destinée à stocker, de façon temporaire et au plus près des moyens de calcul d'un système informatique, par exemple un ou plusieurs microprocesseurs, des données par ailleurs stockées dans une mémoire principale et utilisées en lecture ou en écriture par les moyens de calcul. En s'interposant entre les moyens de calcul et la mémoire principale destinée à être sollicitée en lecture ou écriture de données par ces moyens de calcul, et en se présentant sous la forme d'une mémoire plus petite mais d'accès plus rapide que la mémoire principale, la mémoire cache permet d'accélérer les calculs. Le principe d'utilisation de la mémoire cache est le suivant : toutes les opérations de lecture ou écriture de données en mémoire principale exécutées par les moyens de calcul sont dirigées d'abord vers la mémoire cache ; si les données sont en mémoire cache (succès ou « hit » de la mémoire cache), elles sont retournées directement aux moyens de calcul (en lecture) ou mises à jour dans la mémoire cache (en écriture) ; si au contraire elles ne sont pas en mémoire cache (défaut ou « miss » de la mémoire cache), elles sont transférées de la mémoire principale vers la mémoire cache avant d'être fournies aux moyens de calcul (en lecture) ou stockées dans la mémoire cache avant d'être transférées vers la mémoire principale (en écriture).

En pratique, plusieurs niveaux de mémoires caches peuvent être prévus entre les moyens de calcul et la mémoire principale.

Par ailleurs, une ligne de données, définie comme constituée d'un nombre prédéterminé de mots successifs de données stockés en mémoire cache ou principale (i.e. une ligne de données est constituée de données voisines), est la plus petite quantité de données pouvant être échangée entre une mémoire cache et la mémoire principale, sachant qu'un mot de données est la plus petite quantité de données devant être accessible en lecture ou en écriture par les moyens de calcul. Ainsi, la mémoire cache tire profit non seulement du principe de localité temporelle des données, selon lequel des données récemment utilisées par les moyens de calcul ont de fortes chances d'être réutilisées prochainement et doivent donc être stockées temporairement en mémoire cache, mais également du principe de localité spatiale des données, selon lequel des données voisines de données récemment utilisées par les moyens de calcul ont de fortes chances d'être utilisées prochainement et doivent donc être stockées temporairement en mémoire cache avec les données récemment utilisées dont elles sont voisines.

Une correspondance doit être établie entre chaque mémoire cache et la mémoire principale pour savoir comment attribuer temporairement une ligne de données de la mémoire cache, dite ligne de cache, à une ligne de données quelconque stockée dans la mémoire principale sachant que la mémoire principale comporte un nombre de lignes de données nettement plus élevé que le nombre de lignes de cache. Les systèmes connus de gestion de correspondance entre mémoire cache et mémoire principale implémentent généralement l'un des trois principes suivants :
- la correspondance pleinement associative,
- la correspondance préétablie,
- la correspondance associative par ensembles à N voies.

Le premier principe de correspondance pleinement associative consiste à attribuer a priori n'importe quelle ligne de cache à l'une quelconque des lignes de données de la mémoire principale. Aucune affectation préalable de zones de cache à des zones de la mémoire principale n'est établie. Le choix d'attribution d'une ligne de cache à une ligne de données est donc libre et se fait en pratique sur des critères de disponibilité ou d'ancienneté des données en cache, ce qui est optimal pour le taux de succès de la mémoire cache mais au prix d'une certaine complexité.

Le deuxième principe de correspondance préétablie consiste à appliquer une fonction modulo à l'adresse de chaque ligne de données de la mémoire principale, de sorte que l'on affecte a priori à plusieurs lignes de données, séparées successivement d'une distance constante (i.e. le modulo) dans la mémoire principale, une même ligne de cache. Ainsi, l'affectation préalable de zones de cache à des zones de la mémoire principale est totalement déterministe et l'attribution d'une ligne de cache à une ligne de données est imposée par la fonction modulo. C'est optimal en simplicité mais au prix d'un taux de succès de la mémoire cache généralement peu satisfaisant.

Enfin, le troisième principe de correspondance associative par ensembles à N voies, intermédiaire entre les deux premiers, consiste à affecter préalablement un ensemble à chaque ligne de données de la mémoire principale en fonction de son adresse, chaque ensemble étant réparti dans la mémoire cache dans N voies prédéfinies, puis à attribuer n'importe quelle ligne de cache à l'une quelconque des lignes de données de la mémoire principale dans l'ensemble qui lui est affecté, c'est-à-dire concrètement une ligne par voie. Ainsi, une affectation préalable de zones de cache à des zones de la mémoire principale est établie mais l'attribution d'une ligne de cache à une ligne de données conserve néanmoins une certaine liberté dans l'ensemble qui lui est affecté. Le choix final d'attribution d'une ligne de cache à une ligne de données se fait alors en pratique sur des critères de disponibilité ou d'ancienneté des données en cache, similaires à ceux pratiqués dans le premier principe mais simplifiés.

Dans la plupart des systèmes de gestion de correspondance entre mémoire cache et mémoire principale, seul l'un de ces trois principes est mis en oeuvre. En général, c'est le troisième principe qui est préféré.

L'invention s'applique plus précisément à un système de traitement de données présentant une architecture multiprocesseurs à mémoire partagée, c'est-à-dire un réseau de processeurs à mémoire principale partagée entre les processeurs et comportant une pluralité de noeuds d'accès à la mémoire principale interconnectés entre eux. Dans ce type d'architecture, les processeurs peuvent être regroupés en blocs de deux à seize processeurs, ces blocs étant généralement appelés « clusters ». Chacun de ces clusters possède sa propre hiérarchie de mémoires caches susceptibles de stocker temporairement des lignes de caches et est directement connecté à un noeud du réseau. Réservées aux très gros systèmes au début de l'ère informatique, les architectures multiprocesseurs se sont progressivement répandues aux stations de travail, aux ordinateurs personnels, aux systèmes embarqués et jusque dans les téléphones portables, grâce au progrès constant de l'intégration technologique, permettant notamment d'intégrer des systèmes complets sur une puce qualifiée de SoC (de l'anglais « System on Chip »).

Le système de traitement de données à gestion de cohérence de caches dans une telle architecture comporte alors :
- un ensemble de répertoires distribués entre les noeuds du réseau, chaque répertoire comportant une table de correspondance entre des lignes de caches et des champs d'informations sur ces lignes de caches,
- des moyens de mise à jour des répertoires par ajout de lignes de caches, modification de champs d'informations de lignes de caches ou suppression de lignes de caches dans les tables de correspondance sur la base d'un protocole prédéfini de gestion de cohérence de caches.

Ces répertoires sont généralement appelés « directories ». Plus précisément, un répertoire ou directory associé à un noeud du réseau de processeurs établit et maintient à jour une liste des lignes de caches temporairement stockées dans la hiérarchie de mémoires caches du cluster qui lui est connecté. En d'autres termes, une ligne de cache correspond à une entrée du répertoire. Chaque ligne de cache de cette liste est alors associée à des informations sous la forme de la table de correspondance précitée. Selon le protocole de gestion de cohérence de caches mis en oeuvre, et selon la façon dont on souhaite représenter un ensemble de mémoires caches stockant temporairement une même ligne de cache à un instant donné, ces informations peuvent être plus ou moins nombreuses et de natures diverses.

En outre, il convient de noter qu'à l'échelle d'un cluster de processeurs, chaque mémoire cache d'une hiérarchie est elle-même généralement associée à un répertoire qui lui est propre et qui reprend lui aussi une liste de lignes de caches temporairement stockées dans cette mémoire cache. Le répertoire d'une mémoire cache établit la correspondance entre la ligne de cache et son adresse dans la mémoire principale. Mais dans une hiérarchie de mémoires caches, une règle d'inclusion d'un niveau inférieur dans un niveau supérieur est généralement utilisée de sorte que, par exemple, une mémoire cache de niveau L2 partagée entre plusieurs mémoires caches de niveau L1 impose à ces dernières de ne contenir que des lignes de caches qu'elle-même contient. Ainsi, lorsqu'une instruction de gestion de cohérence de caches (par exemple une invalidation de ligne de cache) s'applique à une mémoire cache de niveau supérieur, elle se propage à toutes les mémoires caches de niveau inférieur qui dépendent d'elle.

Le protocole de gestion de cohérence de caches mis en oeuvre dans le système de traitement de données peut être de différents types connus parmi un protocole MSI (de l'anglais « Modified, Shared, Invalid »), un protocole MESI (de l'anglais « Modified, Exclusive, Shared, Invalid »), un protocole MOESI (de l'anglais « Modified, Owned, Exclusive, Shared, Invalid »), ou autre. Quel que soit le type, pour qu'un tel protocole fonctionne, il importe que des listes de mémoires caches partageant des lignes de données en cache soient présentes dans le réseau de processeurs sous une forme ou une autre, afin de propager les mises à jour ou instructions assurant la cohérence des données en cache pour des opérations de lectures et d'écritures.

Une première solution de représentation de ces listes, dite centralisée, peut être envisagée lorsque l'accès à la mémoire principale est distribué à travers le réseau, chaque noeud ayant accès à une partition donnée de la mémoire principale. Cette partition et l'affectation à un noeud sont réalisées soit de façon figée, grâce à un certain nombre de bits de poids forts des lignes de données, soit de façon dynamique, par exemple à l'aide de tables de correspondances gérées par le système d'exploitation du réseau de processeurs.

Selon cette première solution, la liste des noeuds du réseau partageant en cache une même ligne de données est toute entière localisée dans le répertoire du noeud affecté à la partition de mémoire principale comportant cette ligne de données. Selon une première variante de représentation, un vecteur de bits est associé à la ligne de données considérée dans le répertoire, chaque bit de ce vecteur correspondant par exemple à un noeud ou à un processeur du réseau. Le bit est à « 1 » lorsque l'élément correspondant comporte la ligne de données en cache et à « 0 » sinon. Mais cette représentation devient rapidement inefficace lorsque le réseau de processeurs devient important, sachant en outre qu'en général le nombre de lignes de données fortement partagées en cache est extrêmement faible dans un système multiprocesseurs. Ainsi, selon une seconde variante de représentation, il est avantageux de construire une liste chaînée de taille variable, dont la tête est située dans le répertoire en association avec la ligne de données considérée et dont la suite est stockée dans une autre mémoire dite « tas » (de l'anglais « heap ») du noeud. La tête de liste peut être constituée à minima de l'élément qui a une première copie de la ligne de données en cache ou, selon d'autres modes de réalisations équivalents ne se distinguant que par le compromis fait entre la taille du répertoire et celle de la mémoire tas, des N premiers éléments qui ont cette copie. Mais cette seconde représentation comporte l'inconvénient de provoquer rapidement une saturation de la mémoire tas dès que le nombre d'éléments partageant une même ligne de données devient important.

D'une façon générale, cette première solution présente en outre le défaut de devoir toujours revenir au noeud centralisateur pour gérer la cohérence des caches stockant une ligne de données, ce qui n'est pas optimal en termes de trafic de données à travers le réseau et de longueurs de chemins parcourus par les messages.

D'autres solutions consistent donc à répartir la représentation d'une liste de mémoires caches partageant une même ligne de données en cache entre plusieurs noeuds du réseau.

Une première de ces autres solutions est par exemple décrite dans l'article de Thapar et al, intitulé « Linked list cache coherence for scalable shared memory multiprocessors », publié dans Proceedings of 7th International Parallel Processing Symposium, Newport CA (US), pages 34-43, 13-16 avril 1993. Elle consiste à chaîner entre eux les caches partageant une même ligne de données, à partir du noeud affecté à cette ligne de données dans la mémoire principale. Dans le répertoire du noeud affecté à cette ligne de données, un champ pointe vers une première mémoire cache (ou premier noeud) stockant temporairement une copie de cette ligne de donnée en cache. Le cas échéant, dans le répertoire de la première mémoire cache (ou premier noeud), un champ associé à cette ligne de cache pointe vers une deuxième mémoire cache (ou deuxième noeud) stockant également temporairement une copie de cette ligne de donnée en cache, et ainsi de suite. Chaque fois qu'une mémoire cache (ou noeud) doit être ajoutée à la liste, elle s'interpose par exemple entre le noeud affecté à la ligne de données et la première mémoire cache de la liste chaînée, devenant alors elle-même la première mémoire cache. En pratique, elle transmet une requête en ce sens au noeud en tête de liste chaînée qui lui fournit en réponse l'identifiant de la première mémoire cache vers laquelle elle doit se chaîner.

Un problème lié à cette solution est que pour gérer la cohérence des caches partageant une même ligne de données, il est nécessaire de transiter à travers le réseau d'un noeud à l'autre en suivant l'ordre de la chaîne. Or cet ordre est défini de manière historique indépendamment de la topologie du réseau. Le chemin à parcourir par les messages n'est donc pas optimal. Comme par ailleurs, outre les messages de gestion de cohérence de caches, des messages portant les données de traitement doivent transiter dans le réseau de processeurs, cela engendre un trafic pouvant significativement ralentir le système.

Une deuxième de ces autres solutions à représentation répartie des listes est par exemple décrite dans l'article de Yuang et al, intitulé « Towards hierarchical cluster based cache coherence for large-scale network-on-chip », publié dans Proceeding of 4th International Conférence on Design & Technology of Integrated Systems in Nanoscal Era, Le Caire (EG), pages 119-122, 6-9 avril 2009. Elle consiste à hiérarchiser le réseau de processeurs en le partitionnant en régions. Par exemple, pour un réseau de 256 processeurs, le système complet peut être partitionné en 16 régions de 16 processeurs. Dans chaque région, pour une ligne de données, l'un des noeuds centralise dans son répertoire la liste de mémoires caches partageant cette ligne de données en cache. Il s'agit par exemple du noeud situé topologiquement dans sa région au même endroit que le noeud affecté à la partition de mémoire principale contenant cette ligne de données. A un premier niveau, le noeud affecté à la partition de mémoire principale contenant la ligne de données considérée comporte dans son répertoire la liste (sous forme de vecteur ou liste chaînée par exemple, comme pour la solution de représentation centralisée des listes) des régions stockant en cache une copie de cette ligne de données. A un second niveau, chaque noeud centralisateur de chaque région pour la ligne de données considérée comporte dans son répertoire la liste (sous forme de vecteur ou liste chaînée par exemple) des mémoires caches stockant une copie de cette ligne de données.

Cette solution, même si elle améliore éventuellement le trafic, présente tout de même une certaine rigidité, notamment en imposant des contraintes si l'on souhaite diviser le système en sous systèmes indépendants.

Une troisième de ces autres solutions à représentation répartie des listes, qui sera qualifiée de INCC dans la suite de la description, est par exemple décrite dans l'article de Eisley et al, intitulé « In-network cache coherence », publié dans Proceeding of 39th Annual IEEE/ACM International Symposium on Microarchitecture, Orlando FL (US), pages 321-332, 9-13 décembre 2006. Elle consiste à associer un arbre, représenté dans les répertoires des différents noeuds du réseau, à chaque ligne de données présentant une copie stockée en cache dans au moins l'une des mémoires caches du réseau. Cette solution peut également être envisagée lorsque l'accès à la mémoire principale est distribué à travers le réseau, chaque noeud ayant accès à une partition donnée de la mémoire principale pour laquelle il est qualifié de « home ». L'arbre associé à une ligne de données relie le noeud home à tous les noeuds du réseau dont le cluster de processeurs possède une copie en cache de cette ligne de données. Grâce à la propriété d'inclusion des mémoires caches de niveau L1 dans celles de niveau L2, le répertoire d'un noeud du réseau n'a pas à gérer la liste des mémoires caches de niveau L1 de son cluster de processeurs qui possèdent une copie en cache de la ligne de données considérée, ceci étant pris en charge par la mémoire cache de niveau L2. Selon une implémentation possible de la solution INCC, dans le répertoire de chaque noeud du réseau appartenant à l'arbre associé à une ligne de données comportant une ou plusieurs copies en cache, des champs de statut sont prévus pour indiquer entre autre si ce noeud possède effectivement une copie en cache de la ligne de données, quelles sont les directions (par exemple Nord, Sud, Est, Ouest) qui mènent vers un autre noeud de l'arbre dans le réseau, quelle est la direction qui mène vers le noeud, dit « racine », ayant historiquement le premier stocké en cache cette ligne de données, si ce noeud est lui-même le noeud racine, etc.

Un avantage de cette solution est de définir des chemins à suivre par les messages dans les arbres en respectant la topologie du réseau. Le chemin à suivre par les messages de gestion de cohérence de caches est donc optimisé. Mais là encore, même si cette solution améliore le trafic lié aux messages de gestion de cohérence de caches, ceux-ci peuvent tout de même ralentir significativement le trafic global et en particulier la transmission des données de traitement, ce qui réduit les performances du système.

Il peut ainsi être souhaité de prévoir un système de traitement de données qui permette de s'affranchir d'au moins une partie des problèmes et contraintes précités.

L'article de Marquardt et al, intitulé "A CACHE-COHERENT, DISTRIBUTED MEMORY MULTIPROCESSOR SYSTEM AND ITS PERFORMANCE ANALYSIS*", publié dans IEICE TRANSACTIONS ON INFORMATION AND SYSTEMS, Tokyo (JP), pages 274-290, 01 mai 1992, décrit t un système multi-processeur avec une mémoire cache distribuée maintenue cohérente utilisant une première interconnexion pour le trafic mémoire et et une seconde interconnexion pour assurer la maintenance de la cohérence entre les différentes copies dans la cache distribuée.

Il est donc proposé un système de traitement de données à gestion d'une cohérence de caches dans un réseau de processeurs munis de mémoires caches, ledit réseau étant à mémoire principale partagée entre les processeurs et comportant une pluralité de noeuds d'accès à la mémoire principale interconnectés entre eux, ce système comportant :
- un ensemble de répertoires distribués entre les noeuds du réseau, chaque répertoire comportant une table de correspondance entre des lignes de caches et des champs d'informations sur ces lignes de caches,
- un premier sous-réseau d'interconnexion des noeuds entre eux mettant en oeuvre un premier protocole de transmission de messages, ce premier protocole prévoyant un accès en lecture/écriture aux répertoires lors de tout passage dans les noeuds correspondants d'un message transitant par ce premier sous-réseau,
le système comportant en outre :
- un second sous-réseau d'interconnexion des noeuds entre eux, différent du premier sous-réseau, mettant en oeuvre un second protocole de transmission de messages, ce second protocole excluant tout accès en lecture/écriture aux répertoires lors de tout passage dans les noeuds correspondants d'un message transitant par ce second sous-réseau.

Ainsi, grâce à l'invention, en prévoyant deux sous-réseaux distincts avec deux protocoles de transmission distincts dans le système de traitement de données, l'un des sous-réseaux peut-être dédié au transit de messages nécessitant des accès en lecture/écriture aux répertoires distribués, de manière à faciliter la transmission des messages ne nécessitant pas de tels accès, en particulier les messages dédiés à la transmission des données de traitement d'un noeud à l'autre ou plus généralement ceux qui n'ont pas d'adhérence au protocole de gestion de cohérence de caches. Les capacités de calcul du système ne sont alors pas handicapées par la mise en oeuvre de ce protocole, aussi sophistiqué soit-il.

De façon optionnelle, un système de traitement de données selon l'invention peut comporter des moyens de transmission sélective de messages par l'un ou l'autre desdits premier et second sous-réseaux en fonction d'un type prédéfini de ces messages.

De façon optionnelle également, les moyens de transmission sélective sont conçus pour :
- faire transiter un message par le premier sous-réseau dès lors qu'il est d'un type participant à un protocole de gestion de cohérence des mémoires caches, et
- faire transiter un message par le second sous-réseau dès lors qu'il est d'un type participant à la transmission de données de traitement.

De façon optionnelle également, pour chaque noeud du réseau :
- dans la table de correspondance du répertoire de ce noeud et pour chaque ligne de cache qu'elle identifie, il est prévu au moins un champ, dit champ synchronisateur, d'indication d'une attente éventuelle d'un message destiné à transiter par le second sous-réseau et concernant cette ligne de cache,
- le noeud est configuré pour présenter une première portion, faisant partie du premier sous-réseau et ayant un accès en lecture/écriture au répertoire de ce noeud, et une seconde portion faisant partie du second sous-réseau,
- la première portion est configurée pour appliquer une règle de mise à jour du champ synchronisateur, sur réception d'un message concernant une ligne de cache identifiée dans le répertoire de ce noeud et associé à un autre message destiné à transiter par le second sous-réseau, ou sur réception d'un signal de synchronisation en provenance de la seconde portion, et
- la seconde portion est configurée pour transmettre un signal de synchronisation à la première portion, sur réception d'un message à destination d'une partition de la mémoire principale à laquelle est affecté ce noeud ou d'une mémoire cache affectée à ce noeud.

De façon optionnelle également, pour chaque noeud du réseau, la première portion comporte un moteur protocolaire d'accès en lecture/écriture au répertoire de ce noeud, ce moteur protocolaire étant programmé, en tant que machine à nombre fini d'états, pour appliquer ladite règle de mise à jour du champ synchronisateur.

De façon optionnelle également, les premier et second sous-réseaux sont des réseaux de transmission de données en commutation de paquets et :
- le premier protocole est un protocole de transmission de messages en mode différé ou direct, et
- le second protocole est un protocole de transmission de messages en mode de contrôle de flux en trou de ver.

De façon optionnelle également, des listes de mémoires caches partageant des lignes de caches sont représentées dans le réseau de processeurs pour la mise en oeuvre d'un protocole de gestion de cohérence des mémoires caches, la représentation de chaque liste de mémoires caches partageant une même ligne de cache étant répartie entre plusieurs répertoires de noeuds du réseau de processeurs, parmi lesquels au moins les répertoires des noeuds, dits noeuds de caches, connectés à des processeurs dont les mémoires caches stockent temporairement ladite ligne de cache.

De façon optionnelle également, les répertoires entre lesquels est répartie la représentation d'une liste de mémoires caches partageant une même ligne de cache comportent en outre les répertoires de noeuds d'interconnexion desdits noeuds de caches de manière à former un arbre, distribué dans les répertoires des noeuds du réseau, de représentation de cette ligne de cache, la table de correspondance de chaque répertoire d'un noeud de cet arbre comportant pour cette ligne de cache des champs de statut prévus pour indiquer entre autre si ce noeud possède effectivement une copie de la ligne de cache, quelles sont les directions parmi un ensemble de directions prédéterminées qui mènent vers un autre noeud de l'arbre dans le réseau, quelle est la direction qui mène vers le noeud de l'arbre, dit « racine », ayant historiquement le premier stocké cette ligne de cache, et si ce noeud est lui-même le noeud racine de l'arbre.

Il est également proposé une puce électronique comportant :
- un réseau de processeurs munis de mémoires caches, ledit réseau étant à mémoire principale partagée entre les processeurs et comportant une pluralité de noeuds d'accès à la mémoire principale interconnectés entre eux, et
- un système de traitement de données tel que défini précédemment.

Il est également proposé un procédé de traitement de données à gestion d'une cohérence de caches dans un réseau de processeurs munis de mémoires caches, ledit réseau étant à mémoire principale partagée entre les processeurs et comportant une pluralité de noeuds d'accès à la mémoire principale interconnectés entre eux, ce procédé comportant les étapes suivantes :
- génération de répertoires distribués entre les noeuds du réseau, chaque répertoire comportant une table de correspondance entre des lignes de cache et des champs d'informations sur ces lignes de caches,
- transmission de messages dans un premier sous-réseau d'interconnexion des noeuds entre eux mettant en oeuvre un premier protocole de transmission de messages, ce premier protocole prévoyant un accès en lecture/écriture aux répertoires lors de tout passage dans les noeuds correspondants d'un message transitant par ce premier sous-réseau,
et comportant en outre l'étape suivante :
- transmission de messages dans un second sous-réseau d'interconnexion des noeuds entre eux, différent du premier sous-réseau, mettant en oeuvre un second protocole de transmission de message, ce second protocole excluant tout accès en lecture/écriture aux répertoires lors de tout passage dans les noeuds correspondants d'un message transitant par ce second sous-réseau.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de traitement de données tel que défini précédemment, lorsque ledit programme est exécuté sur un ordinateur.

L'invention sera mieux comprise à l'aide de la description qui va suivre, donnée uniquement à titre d'exemple et faite en se référant aux dessins annexés dans lesquels :
- la figure 1 représente schématiquement la structure générale d'une puce électronique à réseau de processeurs comportant un système de traitement de données selon un mode de réalisation de l'invention,
- la figure 2 illustre les champs d'un répertoire associé à un noeud du réseau de processeurs implémenté dans la puce électronique de la figure 1, et
- la figure 3 détaille schématiquement l'architecture d'un noeud du réseau de processeurs implémenté dans la puce électronique de la figure 1.

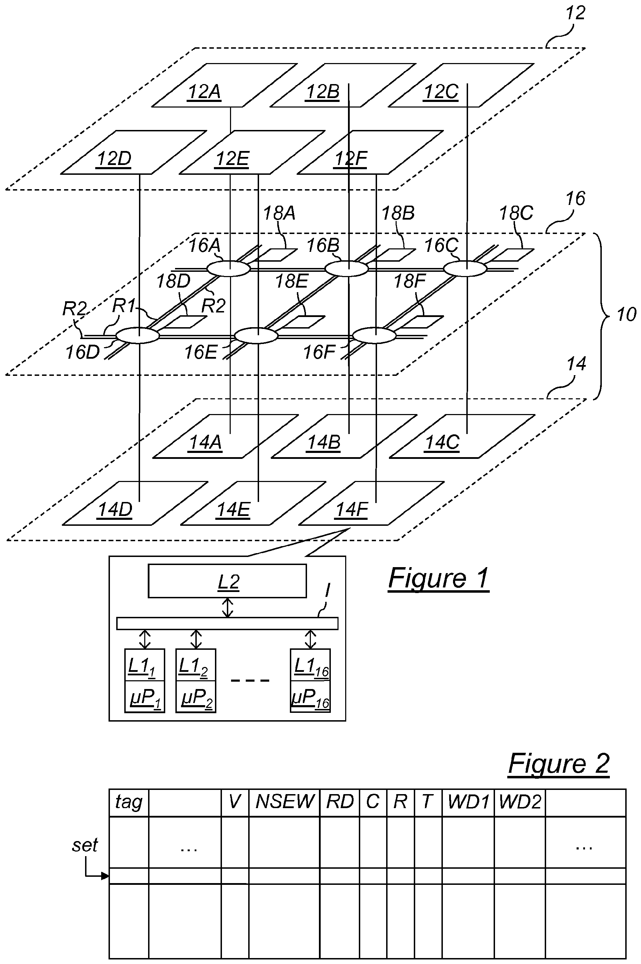

Le dispositif de traitement numérique représenté schématiquement sur la figure 1 comporte une puce électronique 10 connectée à une mémoire de grande capacité utilisée comme mémoire principale 12. La puce électronique 10 comporte un réseau de processeurs munis de mémoires caches, ledit réseau étant à mémoire principale 12 partagée entre les processeurs et comportant une pluralité de noeuds d'accès à la mémoire principale 12 interconnectés entre eux. Dans l'exemple particulier de la figure 1, la mémoire principale 12 est considérée comme externe à la puce électronique 10 et disposée en une couche au dessus de celle-ci, mais il pourrait être considéré que la puce électronique 10 intègre cette couche de mémoire principale 12, dans une architecture à couches multiples par exemple. La couche de mémoire principale 12 est chargée de stocker les données et les instructions de programmes destinées à être exploitées par les processeurs.

Dans l'exemple particulier de la figure 1 également, les processeurs sont regroupés en clusters disposés en matrice sur une même couche inférieure 14 de la puce électronique 10. Seuls six clusters portant les références 14A, 14B, 14C, 14D, 14E et 14F sont représentés mais un nombre quelconque de clusters peut bien sûr être envisagé. Le cluster 14F est détaillé mais les autres clusters peuvent présenter la même architecture. Celle-ci se présente sous la forme de seize processeurs µP₁, µP₂, ..., µP₁₆ munis respectivement de seize mémoires caches de premier niveau L1₁, L1₂, ..., L1₁₆. Ces seize mémoires caches de premier niveau L1₁, L1₂, ..., L1₁₆ sont reliées à une mémoire cache commune de second niveau L2 par l'intermédiaire d'une interface locale I qui gère par exemple les règles d'inclusion entre la mémoire cache de second niveau et les mémoires cache de premier niveau. L'ensemble des processeurs peut être homogène (tous les processeurs sont de même nature) ou hétérogène, employant différents types de processeurs : processeurs généraux (CPU), graphiques (GPU) ou de traitement de signal (DSP), etc. Par ailleurs, un cluster pourrait présenter une hiérarchie de mémoires caches de plus de deux niveaux.

Une couche supérieure 16 de la puce électronique 10 comporte les noeuds d'accès des clusters 14A, 14B, 14C, 14D, 14E et 14F à la mémoire principale 12, à raison d'un noeud par cluster de la couche inférieure 14. Seuls six noeuds portant les références 16A, 16B, 16C, 16D, 16E et 16F sont donc représentés mais un nombre quelconque de noeuds peut bien sûr être envisagé. Ces noeuds sont en outre interconnectés entre eux selon une structure matricielle à quatre directions Nord (N), Sud (S), Est (E) et Ouest (W) qui permet de les repérer topologiquement les uns par rapport aux autres et de se déplacer dans ce réseau bidimensionnel maillé qu'ils constituent. Enfin, chaque noeud 16A, 16B, 16C, 16D, 16E, 16F est connecté à une partition correspondante 12A, 12B, 12C, 12D, 12E, 12F de la mémoire principale 12 à laquelle il est affecté, comme cela a été indiqué précédemment. Les interconnexions des noeuds permettent aussi de relier la puce électronique 10 à des éléments périphériques quelconques. Concrètement, chaque noeud comporte une ou plusieurs mémoires tampons en entrée et en sortie pour la transmission de messages, notamment des messages de gestion de cohérence de caches, en mode de commutation de paquets. Dans l'exemple de la figure 1, chaque noeud est représenté comme connecté à un cluster et à une partition de la mémoire principale, mais on peut aussi envisager plus généralement une architecture avec des noeuds dépeuplés, c'est-à-dire des noeuds ne présentant pas de connexion à un cluster ou à une partition de la mémoire principale.

Comme indiqué précédemment également, à chaque noeud 16A, 16B, 16C, 16D, 16E ou 16F de la couche supérieure 16 est attribué un répertoire 18A, 18B, 18C, 18D, 18E ou 18F qui établit et maintient à jour la liste des lignes de caches temporairement stockées dans la hiérarchie de mémoires caches du cluster 14A, 14B, 14C, 14D, 14E ou 14F qui lui est connecté. Les répertoires 18A, 18B, 18C, 18D, 18E ou 18F sont utilisés, comme cela sera détaillé en référence à la figure 2, à des fins de gestion de la cohérence de caches.

Le réseau d'interconnexion des noeuds 16A, 16B, 16C, 16D, 16E, 16F entre eux est un double réseau comportant un premier sous-réseau R1 et un second sous-réseau R2, tous deux à structure matricielle Nord (N), Sud (S), Est (E) et Ouest (W), c'est-à-dire à maillage bidimensionnel.

Le premier sous-réseau R1 met en oeuvre un premier protocole de transmission de messages, ce premier protocole prévoyant un accès en lecture/écriture aux répertoires 18A, 18B, 18C, 18D, 18E ou 18F lors de tout passage dans les noeuds correspondants d'un message transitant par ce premier sous-réseau R1. Les messages concernés sont ceux qui ont une adhérence au protocole de gestion de cohérence de caches et dont la transmission à travers les noeuds du réseau nécessite de ce fait des accès en lecture/écriture aux répertoires. Ces messages sont généralement de taille réduite, notamment de un à deux paquets en mode de transmission par paquets. En revanche, conformément au protocole de gestion de cohérence de caches et en particulier lorsqu'il est implémenté selon la solution INCC, les messages nécessitent dans la plupart des cas d'être complètement reçus par un noeud avant d'être retransmis, ou avant de provoquer l'émission de messages induits en sortie, pour pouvoir être traités efficacement du point de vue du protocole de gestion de cohérence de caches, c'est-à-dire sans risquer de bloquer une ressource critique pendant plusieurs cycles. Néanmoins, on peut commencer à analyser un message avec l'information du set d'adresse par exemple sans avoir le reste, mais au risque de provoquer un blocage si le reste du message est bloqué quelque part en amont.

Ceci conduit à choisir pour le premier sous-réseau R1 un protocole de transmission des messages en mode différé (de l'anglais « store and forward ») ou direct (de l'anglais « cut-through » ou « virtual cut-through »). En mode différé, un noeud du réseau attend d'avoir complètement reçu et analysé un paquet d'une trame de données (i.e. un message) sur l'une de ses interfaces d'entrée pour commencer sa retransmission sur l'une ou plusieurs de ses interfaces de sortie. Chaque paquet d'un message étant lui-même subdivisé en plusieurs unités élémentaires appelées « flits », ce mode impose la mise en mémoire tampon de la totalité des flits du paquet et retarde sa transmission. En contrepartie, cela garantit l'intégrité du paquet et évite les erreurs. En mode direct, un noeud du réseau peut commencer l'envoi de flits d'un paquet d'une trame de données sur un port de sortie dès le début de la réception de ce paquet sur un de ses ports d'entrées, mais à la condition que l'on se soit assuré à l'avance que le paquet entier peut être reçu par le noeud suivant. Ce mode évite les délais de commutation et ne nécessite pas de mettre un paquet complet en mémoire. En revanche, il ne permet pas d'analyser complètement le paquet avant de le retransmettre et ne peut donc pas garantir l'intégrité ni l'arrivée complète du paquet. En pratique, on préférera le mode direct « virtual cut-through » et on notera qu'il est équivalent au mode différé lorsque l'on reçoit un message entier sur un seul flit.

Le second sous-réseau R2 met en oeuvre un second protocole de transmission de messages, ce second protocole excluant tout accès en lecture/écriture aux répertoires 18A, 18B, 18C, 18D, 18E ou 18F lors de tout passage dans les noeuds correspondants d'un message transitant par ce second sous-réseau R2. Les messages concernés sont ceux qui n'ont pas d'adhérence au protocole de gestion de cohérence de caches et dont la transmission à travers les noeuds du réseau ne nécessite de ce fait pas d'accès en lecture/écriture aux répertoires. Ces messages sont généralement de taille plus importante que les précédents et comportent les données de traitement. En revanche, ils ne nécessitent pas d'être complètement reçus par un noeud avant d'être retransmis par ce même noeud dans le réseau.

Ceci conduit à choisir pour le second sous-réseau R2 un protocole de transmission des messages en mode de contrôle de flux en trou de ver (de l'anglais « wormhole »). Selon ce mode de contrôle de flux, un noeud du réseau peut commencer l'envoi de flits de paquets d'une trame de données sur un port de sortie dès le début de la réception de la trame sur un de ses ports d'entrées sans vérification particulière sur les capacités de réception du noeud suivant. Cela présente ainsi des avantages similaires au mode direct précédemment mentionné, mais à une échelle plus fine et avec plus de souplesse encore.

Pour une définition plus précise et une explication détaillée des trois modes précités, dits « store and forward », « virtual cut-through » et « wormhole », on peut se reporter à l'article de T. Bjerregaard et al, intitulé « A survey of research and practices of Network-on-Chips », publié en 2006 dans ACM Computing Surveys, Volume 38, Issue 1.

Dans l'exemple de la figure 1, et pour simplifier la présentation d'un mode de réalisation préféré de l'invention, le double réseau d'interconnexion des noeuds 16A, 16B, 16C, 16D, 16E, 16F a été présenté comme comportant les deux sous-réseaux R1 et R2 à maillages bidimensionnels identiques. Mais d'une façon plus générale, on peut remarquer que les deux sous-réseaux R1 et R2 peuvent avoir des topologies différentes puisque les deux types de messages, ceux présentant une adhérence au protocole de gestion de cohérence de caches et ceux n'en présentant pas, peuvent suivre des chemins différents. D'autre part, le protocole de gestion de cohérence de caches, par exemple implémenté selon la solution INCC, peut être adapté à un autre type de topologie qu'un réseau maillé bidimensionnel.

Le réseau d'interconnexion des noeuds 16A, 16B, 16C, 16D, 16E, 16F entre eux comporte alors des moyens de transmission sélective de messages par l'un ou l'autre desdits premier et second sous-réseaux en fonction d'un type prédéfini de ces messages. Ces moyens peuvent être implicitement implémentés dans le réseau par une reconnaissance automatique des types des messages dans leurs en-têtes. Par exemple, les messages participant au protocole de gestion de cohérence de caches sont d'un ou plusieurs types spécifiés dans leurs en-têtes et transitent par le premier sous-réseau R1. Les messages participant à la transmission de données de traitement sont d'un type spécifié dans leurs en-têtes et transitent par le second sous-réseau R2.

Un exemple de répertoire pouvant être affecté à l'un quelconque des noeuds 16A, 16B, 16C, 16D, 16E et 16F est illustré sur la figure 2. Il correspond à un mode de réalisation particulier dans lequel la correspondance entre une partition de la mémoire principale 12 et la mémoire cache de niveau L2 du cluster correspondant, ou plus généralement entre la mémoire principale 12 et les mémoires caches du réseau de processeurs, est établie selon un principe de correspondance associative par ensembles à N voies. Il correspond également à un mode de réalisation particulier dans lequel la solution INCC est mise en oeuvre.

Conformément au principe de correspondance associative par ensembles à N voies, un ensemble est affecté à chaque ligne de données de la mémoire principale de façon déterministe et non configurable en fonction de son adresse, plus précisément en fonction d'un certain nombre de bits consécutifs prédéterminés qualifiés de « set » de l'adresse @ de chaque mot de données dans la mémoire principale. Dans cet ensemble, la sélection d'une voie est a priori libre moyennant une vérification de disponibilité et/ou d'ancienneté des voies de l'ensemble.

C'est le set de l'adresse @ qui définit la ligne qui doit être affectée à la ligne de données correspondante dans la table de correspondance du répertoire illustré sur la figure 2. La première colonne de cette table de correspondance identifie le tag de l'adresse @, c'est-à-dire l'ensemble de bits qui avec le set identifient complètement la ligne de données contenant le mot d'adresse @. Les autres colonnes de cette table de correspondance concernent des champs de statut plus ou moins étendus en fonction des protocoles de gestion de cohérence de caches (MSI, MESI, MOESI, ...) et solutions d'implémentation (INCC, ...) envisagés.

Conformément à la solution INCC, un champ binaire « V » de validité indique si l'entrée est valide, c'est-à-dire si le cluster associé à ce répertoire fait effectivement partie de l'arbre associé à la ligne de données considérée. Quatre bits « NSEW » de directions indiquent quelles sont les directions, N pour Nord, S pour Sud, E pour Est et W pour Ouest, qui mènent vers un autre noeud de l'arbre considéré dans le réseau de noeuds. Un champ à deux bits « RD » de direction de la racine indique laquelle des directions précédemment indiquées est celle qui mène vers le noeud racine de l'arbre considéré. Un champ binaire « C » de copie indique si le cluster associé à ce répertoire stocke effectivement en mémoire cache une copie partagée (i.e. dans l'état « Shared » au sens des protocoles de gestion de cohérence de caches MSI, MESI et MOESI) de la ligne de données considérée. Un champ binaire « R » de racine indique si le cluster associé à ce répertoire est lui-même la racine de l'arbre considéré. Conformément à la solution INCC également, le rôle de la racine d'un arbre associé à une ligne de données est d'être le fournisseur préférentiel (mais pas exclusif) de copies de la ligne de données. Enfin, conformément à la solution INCC, un champ binaire « T » d'indication d'une invalidation en cours (de l'anglais « Touched ») est ajouté en colonne de la table de correspondance pour indiquer si une invalidation en cours a été requise localement pour la ligne de données considérée dans le noeud associé à ce répertoire. On notera cependant qu'il y a de nombreuses façons d'implémenter la solution INCC. Il s'agit donc d'une famille de solutions qui utilisent une façon de maintenir les listes de copies de lignes de caches sous forme d'arbres virtuels distribués à travers le réseau de processeurs.

Ainsi, lorsqu'un processeur émet une requête de ligne de données (lecture), cette requête est détectée comme étant un message participant au protocole de gestion de cohérence de caches. Elle est donc tout d'abord routée dans le premier sous-réseau R1 vers le noeud home, c'est-à-dire celui ayant accès à la partition de mémoire principale 12 comportant cette ligne de données. A chaque noeud traversé, le répertoire correspondant est consulté pour détecter si ce noeud appartient à l'arbre associé à la ligne de données requise (s'il existe). Une fois l'arbre atteint, la requête est routée vers sa racine, grâce aux informations de directions indiquées dans les champs correspondants, à travers les liens de l'arbre. Mais dès que la requête atteint un noeud qui possède une copie partagée de la ligne de données, c'est ce noeud qui renvoie une réponse et la ligne de données à l'émetteur de la requête. Lorsque la réponse quitte l'arbre, une nouvelle branche de l'arbre se construit dynamiquement au cours de sa progression vers le noeud de l'émetteur de la requête, qui devient ainsi un nouveau noeud avec copie partagée de l'arbre.

Conformément à l'invention, la réponse et la ligne de données renvoyées par le noeud possédant une copie partagée de la ligne de données constituent deux messages distincts mais associés, l'un (i.e. la réponse) transitant par le premier sous-réseau R1 puisqu'il participe au protocole de gestion de cohérence de caches, l'autre (i.e. la ligne de données) transitant par le second sous-réseau R2 puisqu'il ne participe pas au protocole de gestion de cohérence de caches. Il se pose un problème de synchronisation entre ces deux messages associés pour leur réception par le noeud émetteur de la requête de ligne de données. Il est alors proposé d'enrichir la table de correspondance du répertoire illustré sur la figure 2 d'au moins un nouveau champ de statut dédié spécifiquement à la synchronisation entre messages associés transitant indépendamment par les deux sous-réseaux. Ainsi, un champ d'indication d'une attente éventuelle d'un message destiné à transiter par le second sous-réseau R2, dit premier champ synchronisateur WD1, est ajouté en colonne de la table de correspondance pour indiquer si des données de traitement relatives à une ligne de données considérée sont temporairement attendues dans le noeud considéré. Ce premier champ synchronisateur permet au moins d'assurer une synchronisation de deux messages associés lorsque celui transitant par le premier sous-réseau (i.e. la réponse) arrive au noeud émetteur de la requête de ligne de données avant celui transitant par le second sous-réseau (i.e. la ligne de données). Dans la configuration inverse de réception de ces deux messages, il peut être optionnellement prévu une table supplémentaire, par exemple une table binaire indexée sur des identifiants de requêtes émise par le noeud considéré, dont le champ pour une requête est à une première valeur binaire tant que la ligne de données requise n'est pas arrivée au noeud considéré et mis à une seconde valeur binaire dès sa réception. Cette table peut être conçue sur le modèle des tables LATT (de l'anglais « Local Access Transaction Table ») des mémoires caches de niveau L2 et permet au noeud considéré de gérer le fait que sa mémoire cache de niveau L2 a reçu ou pas la ligne de données. En variante, le noeud émetteur d'une requête de ligne de données peut ne pas avoir à gérer cela. Dans ce cas, il considère de fait que la copie de la ligne de données est déjà stockée dans sa mémoire cache de niveau L2 et toute nouvelle requête de lecture de cette ligne de données reçue par le noeud considéré est transmise à sa mémoire cache de niveau L2 qui doit répondre elle-même si elle possède une copie de cette ligne de données. Si la mémoire cache de niveau L2 ne possède pas une telle copie, alors :
- si le noeud considéré n'est pas la racine de l'arbre associé à cette ligne de données, la requête doit alors être reconstituée à partir des informations contenues dans la réponse de la mémoire cache de niveau L2 et retransmise en direction du noeud racine,
- si le noeud considéré est la racine de l'arbre associé à cette ligne de données, deux solutions sont possibles : envoi d'une demande de relance à l'émetteur de la requête ou stockage de la requête de lecture en attente de la ligne de données, ce qui suppose une mémoire tampon supplémentaire et une gestion supplémentaire du cas ou une invalidation arriverait avant la ligne de données.

Lorsqu'un processeur veut modifier une ligne de données (écriture), il peut, selon le protocole de gestion de cohérence de caches utilisé, demander l'exclusivité sur cette ligne de données. Si un arbre existait déjà pour cette ligne de données, alors il est détruit dynamiquement par la transmission d'une requête d'invalidation se propageant dans l'arbre via le premier sous-réseau R1. Selon le protocole utilisé également, si la ligne de données avait déjà été modifiée par un autre noeud, elle est renvoyée au noeud home, via le second sous-réseau R2, par le noeud racine de l'arbre à détruire. Puis le noeud home renvoie la ligne de données pour modification par l'émetteur de la demande de modification, construisant ainsi un nouvel arbre dont le noeud de l'émetteur de la demande de modification devient le noeud racine.

Conformément à l'invention également, la réponse et la ligne de données renvoyées par le noeud racine au noeud home, ou renvoyées par le noeud home à l'émetteur de la demande de modification, constituent deux messages distincts, l'un (i.e. la réponse) transitant par le premier sous-réseau R1 puisqu'il participe au protocole de gestion de cohérence de caches, l'autre (i.e. la ligne de données) transitant par le second sous-réseau R2 puisqu'il ne participe pas au protocole de gestion de cohérence de caches. Il se pose alors également un problème de synchronisation entre ces messages. En ce qui concerne la synchronisation des messages renvoyés par le noeud home à l'émetteur de la demande de modification, elle est résolue comme détaillé précédemment. En ce qui concerne la synchronisation des messages renvoyés par le noeud racine au noeud home, à savoir l'acquittement de la requête d'invalidation et l'éventuelle mise à jour de la ligne de données sur laquelle porte l'invalidation, le processus est a priori différent. Il peut donc être prévu un second champ synchronisateur WD2 en colonne de la table de correspondance pour indiquer si une mise à jour de la ligne de données considérée devant transiter par le second sous-réseau R2 doit être attendue par le noeud home. Cette information doit être fournie par le noeud racine qui est le seul dont le cluster peut avoir modifié la ligne de données. Elle est par exemple fournie par le message d'acquittement incluant un champ d'indication si la ligne de données a été modifiée ou pas par le noeud racine. Enfin, bien que le champ synchronisateur WD2 soit a priori différent du champ synchronisateur WD1, il est possible de les confondre en un seul champ binaire si les règles de synchronisation telles que définies dans le noeud considéré permettent de distinguer les deux processus.

D'une façon plus générale, les transactions de lecture ou d'écriture comportent au moins une requête et une réponse à cette requête. Elles nécessitent notamment parfois, pour un bon fonctionnement du protocole de gestion de cohérence de caches, la transmission, dans le réseau de processeurs munis de caches, de requêtes d'invalidations de lignes de caches et de messages d'acquittements de ces invalidations. Par exemple, certains protocoles de gestion de cohérence de caches exigent qu'avant de modifier une ligne de données, une mémoire cache s'approprie cette ligne de façon exclusive : toutes les autres mémoires caches possédant une copie de cette ligne doivent s'invalider, le faire savoir par un message d'acquittement et rendre leur copie si celle-ci avait été modifiée localement. La nouvelle modification ne peut avoir lieu que lorsque le processus d'acquittements est achevé. De même, lorsqu'une mémoire cache évince une ligne de cache, il peut être exigé qu'au moins une partie des autres mémoires caches partageant cette ligne de données en cache s'invalide aussi. Ces processus d'invalidations/acquittements sont parfois relativement complexes. D'autres protocoles de gestion de cohérence de caches, qui acceptent qu'une ligne de données en cache soit partagée en écriture, imposent que chaque écriture dans une mémoire cache soit transmise à toutes les autres mémoires caches partageant la ligne de données concernée. Dans tous les cas, les échanges engendrés par ces transactions comprennent à la fois des messages participant au protocole de gestion de cohérence de caches et des messages n'y participant pas, c'est-à-dire à la fois des messages devant transiter par le premier sous-réseau R1 et des messages devant transiter par le second sous-réseau. Il se pose alors d'une façon générale un problème de synchronisation entre ces messages dont la résolution peut être conforme à l'une des deux détaillées ci-dessus.

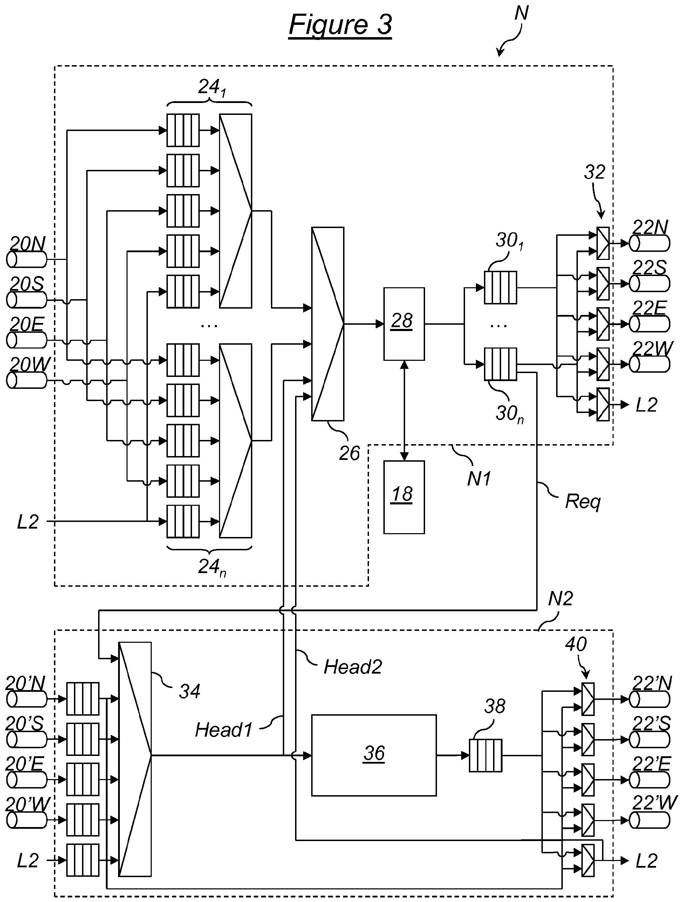

La figure 3 illustre une architecture possible de l'un quelconque des noeuds du réseau, associé à son répertoire qui sera désigné par la référence générique 18.

Ce noeud, identifié par la référence générique N valant pour tous les noeuds précités 16A, 16B, 16C, 16D, 16E, 16F, comporte une première portion N1 faisant partie du premier sous-réseau R1 et une seconde portion N2 faisant partie du second sous-réseau R2. Par la première portion N1 transitent les messages participant au protocole de gestion de cohérence de caches alors que par la seconde portion N2 transitent les messages ne participant pas au protocole de gestion de cohérence de caches, notamment les messages comportant des données de traitement.

La première portion N1 est configurée pour présenter quatre entrées pour les messages en provenance d'autres noeuds du réseau, une par direction possible de provenance dans le réseau matriciel des noeuds 16A, 16B, 16C, 16D, 16E, 16F, c'est-à-dire une entrée 20N pour la direction « Nord », une entrée 20S pour la direction « Sud », une entrée 20E pour la direction « Est » et une entrée 20W pour la direction « Ouest ». Elle présente également une entrée pour les messages provenant de la mémoire cache de niveau L2 du cluster auquel elle est directement connectée.

Cette première portion N1 du noeud N est également configurée pour présenter quatre sorties pour les messages à destination d'autres noeuds du réseau, une par direction possible de destination dans le réseau matriciel des noeuds 16A, 16B, 16C, 16D, 16E, 16F, c'est-à-dire une sortie 22N pour la direction « Nord », une sortie 22S pour la direction « Sud », une sortie 22E pour la direction « Est » et une sortie 22W pour la direction « Ouest ». Elle présente également une sortie pour les messages à destination de la mémoire cache de niveau L2 du cluster auquel elle est directement connectée.

Les messages participant au protocole de gestion de cohérence de caches, qui seront qualifiés par la suite de transactions, pouvant être de différents types, chacune des entrées de la première portion N1 est distribuée entre plusieurs canaux virtuels 24₁, ..., 24ₙ, par exemple en fonction du type de la transaction entrante. Chaque canal virtuel 24ᵢ comporte autant de mémoires tampons que d'entrées, soit cinq dans cet exemple, et un multiplexeur pour effectuer à chaque instant une sélection entre les entrées et ne fournir qu'une seule sortie. Les sorties des canaux virtuels 24₁, ..., 24ₙ sont fournies en entrée d'un arbitre multiplexeur 26 conçu pour choisir à chaque instant quel canal virtuel peut avoir accès à un moteur protocolaire 28 du noeud N. C'est ce moteur protocolaire 28 qui a accès au répertoire 18 du noeud N pour la mise en oeuvre du protocole de gestion de cohérence de caches implémenté et pour la synchronisation des messages transitant par les sous-réseaux R1 et R2. Il détermine alors quelle suite donner à chaque transaction entrante, et notamment vers quelle(s) sortie(s) de la portion N1 du noeud N la transmettre après son traitement local. Ainsi, la portion N1 du noeud N comporte autant de mémoires tampons de sortie 30₁, ..., 30ₙ que de canaux virtuels, en sortie du moteur protocolaire 28, et autant de multiplexeurs de sortie (identifiés par la référence générale 32) que de sorties du noeud, soit cinq multiplexeurs de sortie 32, en sortie des mémoires tampons de sortie 30₁, ..., 30ₙ. Chaque multiplexeur de sortie 32 reçoit plus précisément en entrée la sortie de toutes les mémoires tampons de sortie 30₁, ..., 30ₙ.

Le fonctionnement du moteur protocolaire 28 est classique et ne sera pas détaillé. Il convient juste de préciser qu'il constitue un point de sérialisation et que chaque transaction, requête ou réponse, y est traitée de façon atomique par une lecture de l'état de la ligne adressée par la transaction dans le répertoire, par une décision basée sur l'état de la ligne lu, puis par l'envoi d'au moins un message de sortie vers au moins l'une des mémoires tampons de sortie.

Une des décisions prises par le moteur protocolaire 28 peut être de mettre à jour l'un des champs synchronisateurs WD1 ou WD2 en fonction de la transaction reçue et de règles de mise à jour prédéterminées. Ces règles peuvent notamment prendre la forme d'une ou plusieurs machines à nombre fini d'états : par exemple une première machine à nombre fini d'états est définie pour s'appliquer lorsque le noeud N est le noeud home de la ligne de données faisant l'objet de la transaction et une seconde machine à nombre fini d'états est définie pour s'appliquer sinon. Compte tenu des différentes façons d'implémenter la solution INCC, il existe de nombreuses variantes de réalisation d'une synchronisation des messages transitant par les premier et second sous-réseaux qui en découlent. Elles ne seront pas détaillées.

Une autre des décisions prises par le moteur protocolaire 28 peut être de lire une ligne de données en mémoire principale 12, plus précisément dans la partition de mémoire principale à laquelle est affecté le noeud N. Une requête notée Req est alors envoyée vers la seconde portion N2 qui gère les transmissions de messages non protocolaires entre le noeud N et les autres noeuds, la partition de mémoire principale à laquelle est affecté le noeud N ou la mémoire cache de niveau L2 du cluster directement connecté au noeud N. Cette requête est envoyée avec des paramètres adéquats pour que la ligne de données lue par la seconde portion N2 puisse être mise dans un paquet de données avec la bonne destination.

La seconde portion N2 est configurée pour présenter quatre entrées pour les messages en provenance d'autres noeuds du réseau, une par direction possible de provenance dans le réseau matriciel des noeuds 16A, 16B, 16C, 16D, 16E, 16F, c'est-à-dire une entrée 20'N pour la direction « Nord », une entrée 20'S pour la direction « Sud », une entrée 20'E pour la direction « Est » et une entrée 20'W pour la direction « Ouest ». Elle présente également une entrée pour les messages provenant de la mémoire cache de niveau L2 du cluster auquel elle est directement connectée.

Cette seconde portion N2 du noeud N est également configurée pour présenter quatre sorties pour les messages à destination d'autres noeuds du réseau, une par direction possible de destination dans le réseau matriciel des noeuds 16A, 16B, 16C, 16D, 16E, 16F, c'est-à-dire une sortie 22'N pour la direction « Nord », une sortie 22'S pour la direction « Sud », une sortie 22'E pour la direction « Est » et une sortie 22'W pour la direction « Ouest ». Elle présente également une sortie pour les messages à destination de la mémoire cache de niveau L2 du cluster auquel elle est directement connectée.

Pour les messages ne participant pas au protocole de gestion de cohérence de caches, qui sont principalement des messages contenant des données de traitement ou parfois mais rarement des messages de relance pour lesquels il n'y a pas de qualité de service à offrir et qui ne gênent pas la transmission des données de traitement, il n'est pas utile de prévoir une pluralité de canaux virtuels dans la seconde portion N2 du noeud N. En revanche, comme pour chaque canal virtuel de la première portion N1, dans l'unique canal de transmission de la portion N2, il est prévu autant de mémoires tampons que d'entrées, soit cinq dans cet exemple, et un multiplexeur 34 d'accès à la mémoire principale 12, plus précisément à la partition de mémoire principale 12 à laquelle est affecté le noeud N, pour effectuer à chaque instant une sélection entre les entrées et ne fournir qu'une seule sortie. Le multiplexeur 34 reçoit, outre les données en provenance des cinq mémoires tampons précitées qui sont destinées à être transmises à la mémoire principale 12, toute requête Req de lecture ou de mise à jour d'une ligne de données en mémoire principale 12, cette requête Req provenant de la première portion N1 et concernant une ligne de données stockée ou destinée à être stockée dans la partition de mémoire principale à laquelle est affecté le noeud N. La sortie du multiplexeur 34 est fournie en entrée d'un contrôleur 36 d'accès à la partition de mémoire principale 12 à laquelle est affecté le noeud N. Ce contrôleur d'accès 36 permet de gérer les accès en lecture ou écriture à la mémoire principale 12 en fonction de la teneur du message transmis par le multiplexeur 34. Lorsque l'accès souhaité est une lecture de ligne de données, le contrôleur d'accès 36 lit cette ligne de données dans la partition de mémoire principale 12 à laquelle est affecté le noeud N et la fournit à une mémoire tampon de sortie 38 de la portion N2 du noeud N. La portion N2 du noeud N comporte autant de multiplexeurs de sortie (identifiés par la référence générale 40) que de sorties du noeud, soit cinq multiplexeurs de sortie 40, en sortie de la mémoire tampon de sortie 38.

Les messages ne participant pas au protocole de gestion de cohérence de caches n'ont pas non plus tous besoin d'un accès en lecture ou écriture à la partition de mémoire principale 12 à laquelle est affecté le noeud N. Par conséquent, les cinq mémoires tampons d'entrées sont en outre directement reliées aux cinq multiplexeurs de sortie 40, pour un routage direct en sortie des messages n'ayant pas besoin d'être traités par le contrôleur d'accès 36 et donc également par le multiplexeur 34. Plus précisément, chaque mémoire tampon d'entrée de la portion N2 correspondant à une direction d'où peuvent venir les messages est directement reliée à chaque multiplexeur de sortie, à l'exception toutefois de celui correspondant à sa direction.

Enfin, pour des raisons de synchronisation entre messages participant au protocole de gestion de cohérence de caches et message n'y participant pas, les en-têtes Head1 de messages dirigés en sortie du multiplexeur 34 vers le contrôleur d'accès 36 (c'est-à-dire ceux comportant des données pour lesquelles le noeud N est le noeud « home ») et les en-têtes Head2 de messages dirigés vers la sortie L2 (c'est-à-dire ceux comportant des données intéressant un processeur du cluster associé directement au noeud N), sont en outre routés vers la première portion N1, plus précisément en entrée de l'arbitre multiplexeur 26 avec une priorité élevée, pour une mise à jour de la ligne correspondante du répertoire 18. Ils remplissent ainsi une fonction de signaux de synchronisation entre la seconde portion N2 et la première portion N1. Ils sont en particulier exploités par le moteur protocolaire 28 pour une mise à jour des champs synchronisateurs WD1 et WD2 en fonction d'une règle de mise à jour prédéfinie pour le noeud considéré, cette règle pouvant être différente selon que le noeud est un noeud home pour la ligne de données considérée ou un noeud émetteur d'une requête de lecture/écriture de la ligne de données considérée.

Il apparaît clairement que le système de traitement de donnée à gestion de cohérence de caches tel que décrit précédemment est particulièrement adapté à un réseau de processeurs pour lequel différents types de messages impliquent différentes stratégies de routage pouvant être distribuées en deux sous-réseaux à protocoles de transmission de données différents. En particulier, les messages protocolaires n'ont pas les mêmes contraintes que les messages de données de traitement et le fait de les faire transiter par des sous-réseaux distincts fluidifie les échanges, notamment dans une configuration mettant en oeuvre une représentation répartie des listes de lignes de données partagées en caches.

La mise en oeuvre de l'invention est donc particulièrement, mais pas exclusivement, appropriée dans le cadre d'une représentation de type INCC. Dans les différents exemples à représentation répartie des listes précédemment cités, elle est par exemple également appropriée dans le cadre d'une représentation par partition en régions du réseau de processeurs. En effet, selon cette solution, une requête de lecture d'une ligne de données doit être adressée au représentant local (en termes de région) du noeud home. C'est ce représentant local qui transmet la requête au véritable noeud home s'il ne peut pas lui-même renvoyer la ligne de données requise ou, dans une variante plus proche de la solution INCC, une mémoire cache de niveau L2 locale pourrait fournir localement la ligne de données requise pour éviter l'engorgement de la mémoire principale. Cependant, même en cas de succès, il est nécessaire d'envoyer une requête de lecture au noeud home. L'utilisation d'un sous-réseau dédié à la transmission des données permet alors de renvoyer directement les données au requérant sans passer par le représentant local du noeud home. La fonction de routage est donc différente pour les données de traitement et pour les messages protocolaires, de sorte que la mise en oeuvre de l'invention est également avantageuse dans ce cas. Elle permet, comme dans la solution INCC, de découpler la partie protocolaire de la partie transmission de données pour optimiser chaque sous-réseau et utiliser des fonctions de routage différentes. Par ailleurs, les mêmes problèmes de synchronisation entre les deux sous-réseaux se posent et sont résolus de façon similaire.

On notera enfin que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

## Revendications

1. Système de traitement de données à gestion d'une cohérence de caches dans un réseau (14, 16) de processeurs (µP₁, µP₂, ..., µP₁₆) munis de mémoires caches (L2, L1₁, L1₂, ..., L1₁₆), ledit réseau (14, 16) étant à mémoire principale (12) partagée entre les processeurs et comportant une pluralité de noeuds (N ; 16A, 16B, 16C, 16D, 16E, 16F) d'accès à la mémoire principale interconnectés entre eux, ce système comportant :
- un ensemble de répertoires (18 ; 18A, 18B, 18C, 18D, 18E, 18F) distribués entre les noeuds (N ; 16A, 16B, 16C, 16D, 16E, 16F) du réseau (14, 16), chaque répertoire comportant une table de correspondance entre des lignes de caches et des champs d'informations sur ces lignes de caches,
- un premier sous-réseau (R1) d'interconnexion des noeuds (N ; 16A, 16B, 16C, 16D, 16E, 16F) entre eux mettant en oeuvre un premier protocole de transmission de messages, ce premier protocole prévoyant un accès en lecture/écriture aux tables de correspondance des répertoires (18 ; 18A, 18B, 18C, 18D, 18E, 18F) lors de tout passage dans les noeuds correspondants d'un message transitant par ce premier sous-réseau, et
- un second sous-réseau (R2) d'interconnexion des noeuds (N ; 16A, 16B, 16C, 16D, 16E, 16F) entre eux, différent du premier sous-réseau (R1), mettant en oeuvre un second protocole de transmission de messages, différent du premier protocole de transmission,
**caractérisé en ce que** ce second protocole exclut tout accès en lecture/écriture aux tables de correspondance des répertoires (18 ; 18A, 18B, 18C, 18D, 18E, 18F) lors de tout passage dans les noeuds correspondants d'un message transitant par ce second sous-réseau.

2. Système de traitement de données selon la revendication 1, comportant des moyens de transmission sélective de messages par l'un ou l'autre desdits premier et second sous-réseaux (R1, R2) en fonction d'un type prédéfini de ces messages.

3. Système de traitement de données selon la revendication 2, dans lequel les moyens de transmission sélective sont conçus pour :
- faire transiter un message par le premier sous-réseau (R1) dès lors qu'il est d'un type participant à un protocole de gestion de cohérence des mémoires caches, un tel type de message incluant tout message de requête de ligne de cache et tout message de réponse à une requête de ligne de cache ne comportant pas ladite ligne de cache, et
- faire transiter un message par le second sous-réseau (R2) dès lors qu'il est d'un type participant à la transmission de données de traitement, un tel type de message incluant tout message porteur de ligne de cache.

4. Système de traitement de données selon l'une quelconque des revendications 1 à 3, dans lequel, pour chaque noeud (N ; 16A, 16B, 16C, 16D, 16E, 16F) du réseau (14, 16) :
- dans la table de correspondance du répertoire (18 ; 18A, 18B, 18C, 18D, 18E, 18F) de ce noeud et pour chaque ligne de cache (set, tag) qu'elle identifie, il est prévu au moins un champ (WD1, WD2), dit champ synchronisateur, d'indication d'une attente éventuelle d'un message destiné à transiter par le second sous-réseau (R2) et concernant cette ligne de cache (set, tag),
- le noeud est configuré pour présenter une première portion (N1), faisant partie du premier sous-réseau (R1) et ayant un accès en lecture/écriture au répertoire de ce noeud, et une seconde portion (N2) faisant partie du second sous-réseau (R2),
- la première portion (N1) est configurée (28) pour appliquer une règle de mise à jour du champ synchronisateur (WD1, WD2), sur réception d'un message concernant une ligne de cache (set, tag) identifiée dans le répertoire de ce noeud et associé à un autre message destiné à transiter par le second sous-réseau (R2), ou sur réception d'un signal de synchronisation (Head1, Head2) en provenance de la seconde portion (N2), et
- la seconde portion (N2) est configurée pour transmettre un signal de synchronisation (Head1, Head2) à la première portion (N1), sur réception d'un message à destination d'une partition (12A, 12B, 12C, 12D, 12E, 12F) de la mémoire principale (12) à laquelle est affecté ce noeud ou d'une mémoire cache (L2, L1₁, L1₂, ..., L1₁₆), affectée à ce noeud.

5. Système de traitement de données selon la revendication 4, dans lequel, pour chaque noeud (N ; 16A, 16B, 16C, 16D, 16E, 16F) du réseau (14, 16), la première portion (N1) comporte un moteur protocolaire (28) d'accès en lecture/écriture au répertoire de ce noeud, ce moteur protocolaire étant programmé, en tant que machine à nombre fini d'états, pour appliquer ladite règle de mise à jour du champ synchronisateur (WD1, WD2).

6. Système de traitement de données selon l'une quelconque des revendications 1 à 5, dans lequel les premier et second sous-réseaux (R1, R2) sont des réseaux de transmission de données en commutation de paquets et :
- le premier protocole est un protocole de transmission de messages en mode différé ou direct, et
- le second protocole est un protocole de transmission de messages en mode de contrôle de flux en trou de ver.

7. Système de traitement de données selon l'une quelconque des revendications 1 à 6, dans lequel des listes de mémoires caches partageant des lignes de caches sont représentées dans le réseau de processeurs (14, 16) pour la mise en oeuvre d'un protocole de gestion de cohérence des mémoires caches, la représentation (V, NSEW, RD, C, R, T, WD1, WD2) de chaque liste de mémoires caches partageant une même ligne de cache (set, tag) étant répartie entre plusieurs répertoires (18 ; 18A, 18B, 18C, 18D, 18E, 18F) de noeuds du réseau de processeurs, parmi lesquels au moins les répertoires des noeuds, dits noeuds de caches, connectés à des processeurs dont les mémoires caches stockent temporairement ladite ligne de cache (set, tag).

8. Système de traitement de données selon la revendication 7, dans lequel les répertoires (18 ; 18A, 18B, 18C, 18D, 18E, 18F) entre lesquels est répartie la représentation d'une liste de mémoires caches partageant une même ligne de cache (set, tag) comportent en outre les répertoires de noeuds d'interconnexion desdits noeuds de caches de manière à former un arbre, distribué dans les répertoires des noeuds du réseau, de représentation de cette ligne de cache (set, tag), la table de correspondance de chaque répertoire d'un noeud de cet arbre comportant pour cette ligne de cache des champs de statut prévus pour indiquer entre autre si ce noeud possède effectivement une copie de la ligne de cache (C), quelles sont les directions parmi un ensemble de directions prédéterminées qui mènent vers un autre noeud de l'arbre dans le réseau (NSEW), quelle est la direction qui mène vers le noeud de l'arbre, dit « racine », ayant historiquement le premier stocké cette ligne de cache (RD), et si ce noeud est lui-même le noeud racine de l'arbre (R).

9. Puce électronique (10) comportant :
- un réseau (14, 16) de processeurs (µP₁, µP₂, ..., µP₁₆) munis de mémoires caches (L2, L1₁, L1₂, ..., L1₁₆), ledit réseau étant à mémoire principale (12) partagée entre les processeurs et comportant une pluralité de noeuds (N ; 16A, 16B, 16C, 16D, 16E, 16F) d'accès à la mémoire principale interconnectés entre eux, et
- un système de traitement de données selon l'une quelconque des revendications 1 à 8.

10. Procédé de traitement de données à gestion d'une cohérence de caches dans un réseau (14, 16) de processeurs (µP₁, µP₂, ..., µP₁₆) munis de mémoires caches (L2, L1₁, L1₂, ..., L1₁₆), ledit réseau (14, 16) étant à mémoire principale (12) partagée entre les processeurs et comportant une pluralité de noeuds (N ; 16A, 16B, 16C, 16D, 16E, 16F) d'accès à la mémoire principale interconnectés entre eux, ce procédé comportant les étapes suivantes :
- génération de répertoires (18; 18A, 18B, 18C, 18D, 18E, 18F) distribués entre les noeuds (N ; 16A, 16B, 16C, 16D, 16E, 16F) du réseau (14, 16), chaque répertoire comportant une table de correspondance entre des lignes de cache et des champs d'informations sur ces lignes de caches,
- transmission de messages dans un premier sous-réseau (R1) d'interconnexion des noeuds (N ; 16A, 16B, 16C, 16D, 16E, 16F) entre eux mettant en oeuvre un premier protocole de transmission de messages, ce premier protocole prévoyant un accès en lecture/écriture aux tables de correspondance des répertoires (18 ; 18A, 18B, 18C, 18D, 18E, 18F) lors de tout passage dans les noeuds correspondants d'un message transitant par ce premier sous-réseau, et
- transmission de messages dans un second sous-réseau (R2) d'interconnexion des noeuds (N ; 16A, 16B, 16C, 16D, 16E, 16F) entre eux, différent du premier sous-réseau (R1), mettant en oeuvre un second protocole de transmission de message, différent du premier protocole de transmission,
**caractérisé en ce que** ce second protocole exclut tout accès en lecture/écriture aux tables de correspondance des répertoires (18 ; 18A, 18B, 18C, 18D, 18E, 18F) lors de tout passage dans les noeuds correspondants d'un message transitant par ce second sous-réseau.

## Patentansprüche

1. Datenverarbeitungssystem mit Verwaltung einer Cache-Kohärenz in einem Netzwerk (14, 16) von Prozessoren (µP₁, µP₂, ..., µP₁₆), die mit Cache-Speichern (L2, L1₁, L1₂, ..., L1₁₆) ausgestattet sind, wobei das Netzwerk (14, 16) einen Hauptspeicher (12) aufweist, der von den Prozessoren gemeinsam genutzt wird, und eine Vielzahl von Knoten (N; 16A, 16B, 16C, 16D, 16E, 16F) zum Zugriff auf den Hauptspeicher umfasst, die untereinander verbunden sind, wobei dieses System umfasst:
- einen Satz von Verzeichnissen (18; 18A, 18B, 18C, 18D, 18E, 18F), die auf die Knoten (N; 16A, 16B, 16C, 16D, 16E, 16F) des Netzwerks (14, 16) verteilt sind, wobei jedes Verzeichnis eine Entsprechungstabelle zwischen Cache-Zeilen und Informationsfeldern zu diesen Cache-Zeilen umfasst,
- ein erstes Teilnetzwerk (R1) zur Verbindung der Knoten (N; 16A, 16B, 16C, 16D, 16E, 16F) untereinander, das ein erstes Nachrichtenübertragungsprotokoll einsetzt, wobei dieses erste Protokoll einen Lese-/Schreibzugriff auf die Entsprechungstabellen der Verzeichnisse (18; 18A, 18B, 18C, 18D, 18E, 18F) bei jedem Durchgang einer Nachricht, die durch dieses erste Teilnetzwerk geleitet wird, in den entsprechenden Knoten vorsieht, und
- ein vom ersten Teilnetzwerk (R1) verschiedenes zweites Teilnetzwerk (R2) zur Verbindung der Knoten (N; 16A, 16B, 16C, 16D, 16E, 16F) untereinander, das ein zweites Nachrichtenübertragungsprotokoll einsetzt, welches vom ersten Übertragungsprotokoll verschieden ist,
**dadurch gekennzeichnet, dass** dieses zweite Protokoll jeden Lese-/Schreibzugriff auf die Entsprechungstabellen der Verzeichnisse (18; 18A, 18B, 18C, 18D, 18E, 18F) bei jedem Durchgang einer Nachricht, die durch dieses zweite Teilnetzwerk geleitet wird, in den entsprechenden Knoten ausschließt.

2. Datenverarbeitungssystem nach Anspruch 1, das Mittel zur selektiven Übertragung von Nachrichten durch das eine oder das andere aus dem ersten und zweiten Teilnetzwerk (R1, R2) in Abhängigkeit von einem vordefinierten Typ dieser Nachrichten umfasst.

3. Datenverarbeitungssystem nach Anspruch 2, wobei die selektiven Übertragungsmittel dafür konzipiert sind:
- eine Nachricht durch das erste Teilnetzwerk (R1) zu leiten, sobald dieselbe von einem Typ ist, der an einem Protokoll zur Kohärenzverwaltung der Cache-Speicher mitwirkt, wobei ein solcher Nachrichtentyp jede Cache-Zeilen-Anforderungsnachricht und jede Antwortnachricht auf eine Cache-Zeilen-Anforderung einschließt, die die Cache-Zeile nicht umfasst, und
- eine Nachricht durch das zweite Teilnetzwerk (R2) zu leiten, sobald dieselbe von einem Typ ist, der an der Übertragung von Verarbeitungsdaten mitwirkt, wobei ein solcher Nachrichtentyp jede Nachricht einschließt, die eine Cache-Zeile trägt.

4. Datenverarbeitungssystem nach einem der Ansprüche 1 bis 3, wobei für jeden Knoten (N; 16A, 16B, 16C, 16D, 16E, 16F) des Netzwerks (14, 16):
- in der Entsprechungstabelle des Verzeichnisses (18; 18A, 18B, 18C, 18D, 18E, 18F) dieses Knotens und für jede Cache-Zeile (set, tag), die sie identifiziert, mindestens ein als Synchronisationsfeld bezeichnetes Feld (WD1, WD2) zur Angabe einer eventuellen Erwartung einer Nachricht vorgesehen ist, die dazu bestimmt ist, durch das zweite Teilnetzwerk (R2) geleitet zu werden und diese Cache-Zeile (set, tag) betrifft,
- der Knoten dafür konfiguriert ist, einen ersten Abschnitt (N1) aufzuweisen, der zum ersten Teilnetzwerk (R1) gehört und einen Lese-/Schreibzugriff auf das Verzeichnis dieses Knotens aufweist, und einen zweiten Abschnitt (N2), der zum zweiten Teilnetzwerk (R2) gehört,
- der erste Abschnitt (N1) dafür konfiguriert (28) ist, bei Empfang einer Nachricht, die eine im Verzeichnis dieses Knotens identifizierte Cache-Zeile (set, tag) betrifft und mit einer anderen Nachricht assoziiert ist, die dazu bestimmt ist, durch das zweite Teilnetzwerk (R2) geleitet zu werden, oder bei Empfang eines Synchronisationssignals (Head1, Head2) aus dem zweiten Abschnitt (N2) eine Regel zur Aktualisierung des Synchronisationsfeldes (WD1, WD2) anzuwenden, und
- der zweite Abschnitt (N2) dafür konfiguriert ist, bei Empfang einer Nachricht für eine Partition (12A, 12B, 12C, 12D, 12E, 12F) des Hauptspeichers (12), der dieser Knoten zugeordnet ist, oder einen Cache-Speicher (L2, L1₁, L1₂, ..., L1₁₆), der diesem Knoten zugeordnet ist, ein Synchronisationssignal (Head1, Head2) an den ersten Abschnitt (N1) zu übertragen.

5. Datenverarbeitungssystem nach Anspruch 4, wobei für jeden Knoten (N; 16A, 16B, 16C, 16D, 16E, 16F) des Netzwerks (14, 16) der erste Abschnitt (N1) eine Protokoll-Engine (28) zum Lese-/Schreibzugriff auf das Verzeichnis dieses Knotens umfasst, wobei diese Protokoll-Engine als endlicher Automat dafür programmiert ist, die Regel zur Aktualisierung des Synchronisationsfeldes (WD1, WD2) anzuwenden.

6. Datenverarbeitungssystem nach einem der Ansprüche 1 bis 5, wobei das erste und zweite Teilnetzwerk (R1, R2) paketvermittelte Datenübertragungsnetzwerke sind, und:
- das erste Protokoll ein Nachrichtenübertragungsprotokoll im Batch- oder Direktmodus ist, und
- das zweite Protokoll ein Nachrichtenübertragungsprotokoll im Wurmloch-Flusssteuerungsmodus ist.

7. Datenverarbeitungssystem nach einem der Ansprüche 1 bis 6, wobei Listen von Cache-Speichern, die Cache-Zeilen gemeinsam nutzen, im Netzwerk von Prozessoren (14, 16) für den Einsatz eines Protokolls zur Kohärenzverwaltung der Cache-Speicher dargestellt sind, wobei die Darstellung (V, NSEW, RD, C, R, T, WD1, WD2) jeder Liste von Cache-Speichern, die ein und dieselbe Cache-Zeile (set, tag) gemeinsam nutzen, auf mehrere Verzeichnisse (18; 18A, 18B, 18C, 18D, 18E, 18F) von Knoten des Prozessornetzwerks verteilt ist, darunter mindestens die Verzeichnisse der als Cache-Knoten bezeichneten Knoten, die mit Prozessoren verbunden sind, deren Cache-Speicher die Cache-Zeile (set, tag) vorübergehend speichern.

8. Datenverarbeitungssystem nach Anspruch 7, wobei die Verzeichnisse (18; 18A, 18B, 18C, 18D, 18E, 18F), auf die die Darstellung einer Liste von Cache-Speichern, die ein und dieselbe Cache-Zeile (set, tag) gemeinsam nutzen, verteilt ist, weiter die Verzeichnisse von Verbindungsknoten der Cache-Knoten umfassen, um einen in den Verzeichnissen der Knoten des Netzwerks verteilten Baum zur Darstellung dieser Cache-Zeile (set, tag) zu bilden, wobei die Entsprechungstabelle jedes Verzeichnisses eines Knotens dieses Baums für diese Cache-Zeile Statusfelder umfasst, die dafür vorgesehen sind, unter anderem anzugeben, ob dieser Knoten tatsächlich eine Kopie der Cache-Zeile (C) besitzt, welche aus einem Satz vorbestimmter Richtungen die Richtungen sind, die zu einem anderen Knoten des Baums im Netzwerk (NSEW) führen, welche die Richtung ist, die zu dem als "Stamm" bezeichneten Knoten des Baums führt, der diese Cache-Zeile (RD) historisch als erster gespeichert hat, und ob dieser Knoten selbst der Stammknoten des Baums (R) ist.

9. Elektronischer Chip (10), umfassend:
- ein Netzwerk (14, 16) von Prozessoren (µP₁, µP₂, ..., µP₁₆), die mit Cache-Speichern (L2, L1₁, L1₂, ..., L1₁₆) ausgestattet sind, wobei das Netzwerk einen Hauptspeicher (12) aufweist, der von den Prozessoren gemeinsam genutzt wird, und eine Vielzahl von Knoten (N; 16A, 16B, 16C, 16D, 16E, 16F) zum Zugriff auf den Hauptspeicher umfasst, die untereinander verbunden sind, und
- ein Datenverarbeitungssystem nach einem der Ansprüche 1 bis 8.

10. Datenverarbeitungsverfahren mit Verwaltung einer Cache-Kohärenz in einem Netzwerk (14, 16) von Prozessoren (µP₁, µP₂, ..., µP₁₆), die mit Cache-Speichern (L2, L1₁, L1₂, ..., L1₁₆) ausgestattet sind, wobei das Netzwerk (14, 16) einen Hauptspeicher (12) aufweist, der von den Prozessoren gemeinsam genutzt wird, und eine Vielzahl von Knoten (N; 16A, 16B, 16C, 16D, 16E, 16F) zum Zugriff auf den Hauptspeicher umfasst, die untereinander verbunden sind, wobei dieses Verfahren die folgenden Schritte umfasst:
- Erzeugen von Verzeichnissen (18; 18A, 18B, 18C, 18D, 18E, 18F), die auf die Knoten (N; 16A, 16B, 16C, 16D, 16E, 16F) des Netzwerks (14, 16) verteilt sind, wobei jedes Verzeichnis eine Entsprechungstabelle zwischen Cache-Zeilen und Informationsfeldern zu diesen Cache-Zeilen umfasst,
- Übertragen von Nachrichten in einem ersten Teilnetzwerk (R1) zur Verbindung der Knoten (N; 16A, 16B, 16C, 16D, 16E, 16F) untereinander, das ein erstes Nachrichtenübertragungsprotokoll einsetzt, wobei dieses erste Protokoll einen Lese-/Schreibzugriff auf die Entsprechungstabellen der Verzeichnisse (18; 18A, 18B, 18C, 18D, 18E, 18F) bei jedem Durchgang einer Nachricht, die durch dieses erste Teilnetzwerk geleitet wird, in den entsprechenden Knoten vorsieht, und
- Übertragen von Nachrichten in einem vom ersten Teilnetzwerk (R1) verschiedenen zweiten Teilnetzwerk (R2) zur Verbindung der Knoten (N; 16A, 16B, 16C, 16D, 16E, 16F) untereinander, das ein zweites Nachrichtenübertragungsprotokoll einsetzt, welches vom ersten Übertragungsprotokoll verschieden ist,
**dadurch gekennzeichnet, dass** dieses zweite Protokoll jeden Lese-/Schreibzugriff auf die Entsprechungstabellen der Verzeichnisse (18; 18A, 18B, 18C, 18D, 18E, 18F) bei jedem Durchgang einer Nachricht, die durch dieses zweite Teilnetzwerk geleitet wird, in den entsprechenden Knoten ausschließt.

## Claims

1. A system for data processing with management of a cache consistency in a network (14, 16) of processors (µP₁, µP₂, ..., µP₁₆) equipped with cache memories (L2, L1₁, L1₂, ..., L1₁₆), said network (14, 16) having a main memory (12) shared between the processors and comprising a plurality of nodes (N; 16A, 16B, 16C, 16D, 16E, 16F) for access to the main memory interconnected with one another, said system comprising:
- a set of directories (18; 18A, 18B, 18C, 18D, 18E, 18F) distributed between the nodes (N; 16A, 16B, 16C, 16D, 16E, 16F) of the network (14, 16), each directory comprising a table of correspondence between cache lines and information fields on said cache lines,
- a first sub-network (R1) for interconnection of the nodes (N; 16A, 16B, 16C, 16D, 16E, 16F) with one another implementing a first message transmission protocol, this first protocol providing read/write access to the correspondence tables of the directories (18; 18A, 18B, 18C, 18D, 18E, 18F) during any passage, in the corresponding nodes, of a message passing through this first sub-network, and
- a second sub-network (R2) for interconnection of the nodes (N; 16A, 16B, 16C, 16D, 16E, 16F) with one another, different from the first sub-network (R1), implementing a second message transmission protocol,
**characterized in that** this second protocol excludes any read/write access to the correspondence tables of the directories (18; 18A, 18B, 18C, 18D, 18E, 18F) during any passage, in the corresponding nodes, of a message passing through this second sub-network.

2. The system for data processing according to claim 1, comprising means for selective transmission of messages by one or the other of said first and second sub-networks (R1, R2) according to a predefined type of said messages.

3. The system for data processing according to claim 2, wherein the selective transmission means are designed to:
- send a message through the first sub-network (R1) when it is of a type participating in a cache memory consistency management protocol, such a message type including any cache line request message and any message of response to a cache line request not comprising said cache line, and
- send a message through the second sub-network (R2) when it is of a type participating in the transmission of processing data, such a message type including any message having a cache line.

4. The system for data processing according to any one of claims 1 to 3, wherein, for each node (N; 16A, 16B, 16C, 16D, 16E, 16F) of the network (14, 16):
- in the correspondence table of the directory (18; 18A, 18B, 18C, 18D, 18E, 18F) of this node and for each cache line (set, tag) that it identifies, at least one field (WD1, WD2) is provided, called a synchronizing field, indicating a possible wait for a message intended to pass through the second sub-network (R2) and concerning this cache line (set, tag),
- the node is configured so as to have a first portion (N1), forming part of the first sub-network (R1) and having read/write access to the directory of said node, and a second portion (N2) forming part of the second sub-network (R2),
- the first portion (N1) is configured (28) so as to apply a synchronizing field (WD1, WD2) updating rule, upon receipt of a message concerning a cache line (set, tag) identified in the directory of said node and associated with another message intended to pass through the second sub-network (R2), or upon receipt of a synchronization signal (Head1, Head2) coming from the second portion (N2), and
- the second portion (N2) is configured so as to transmit a synchronization signal (Head1, Head2) to the first portion (N1), upon receipt of a message intended for a partition (12A, 12B, 12C, 12D, 12E, 12F) of the main memory (12) to which said node is associated or for a cache memory (L2, L1₁, L1₂, ..., L1₁₆) assigned to said node.

5. The system for data processing according to claim 4, wherein, for each node (N; 16A, 16B, 16C, 16D, 16E, 16F) of the network (14, 16), the first portion (N1) comprises a protocol engine (28) for read/write access to the directory of said node, said protocol engine being programmed, as a finite-state machine, in order to apply said synchronizing field (WD1, WD2) updating rule.

6. The system for data processing according to any one of claims 1 to 5, wherein the first and second sub-networks (R1, R2) are packet switching data transmission networks, and:
- the first protocol is a protocol for transmission of messages in store-and-forward or cut-through mode, and
- the second protocol is a protocol for transmission of messages in wormhole flow control mode.

7. The system for data processing according to any one of claims 1 to 6, wherein cache memory lists sharing cache lines are represented in the network of processors (14, 16) for implementing a cache memory consistency management protocol, the representation (V, NSEW, RD, C, R, T, WD1, WD2) of each list of cache memories sharing the same cache line (set, tag) being distributed between a plurality of directories (18; 18A, 18B, 18C, 18D, 18E, 18F) of nodes of the processor network, including at least the directories of the nodes, called cache nodes, connected to processors, the cache memories of which temporarily store said cache line (set, tag).

8. The system for data processing according to claim 7, wherein the directories (18; 18A, 18B, 18C, 18D, 18E, 18F) between which the representation of a list of cache memories sharing the same cache line (set, tag) is distributed further comprise the directories of nodes for interconnection of said cache nodes so as to form a tree, distributed in the directories of the nodes of the network, for representation of said cache line (set, tag), the correspondence table of each directory of a node of said tree comprising, for said cache line, status fields intended to indicate, *inter alia*, whether said node actually has a copy of the cache line (C), which directions among a set of predetermined directions lead to another node of the tree in the network (NSEW), which direction leads to the node of the tree, called a "root", historically having first stored said cache line, and whether said node is itself the root node of the tree (R).

9. An electronic chip (10) comprising:
- a network (14, 16) of processors (µP₁, µP₂, ..., µP₁₆) equipped with cache memories (L2, L1₁, L1₂, ..., L1₁₆), said network having a main memory (12) shared between the processors and comprising a plurality of nodes (N; 16A, 16B, 16C, 16D, 16E, 16F) for access to the main memory interconnected with one another, and
- a system for data processing according to any one of claims 1 to 8.

10. A method for data processing with management of a cache consistency in a network (14, 16) of processors (µP₁, µP₂, ..., µP₁₆) equipped with cache memories (L2, L1₁, L1₂, ..., L1₁₆), said network (14, 16) having a main memory (12) shared between the processors and comprising a plurality of nodes (N; 16A, 16B, 16C, 16D, 16E, 16F) for access to the main memory interconnected with one another, said method comprising the following steps:
- generation of directories (18; 18A, 18B, 18C, 18D, 18E, 18F) distributed between the nodes (N; 16A, 16B, 16C, 16D, 16E, 16F) of the network (14, 16), each directory comprising a table of correspondence between cache lines and information fields on these cache lines,
- transmission of messages in a first sub-network (R1) for interconnection of nodes (N; 16A, 16B, 16C, 16D, 16E, 16F) with one another implementing a first message transmission protocol, this first protocol providing read/write access to the correspondence tables of the directories (18; 18A, 18B, 18C, 18D, 18E, 18F) during any passage, in the corresponding nodes, of a message passing through this first sub-network, and
- transmission of messages in a second sub-network (R2) for interconnection of nodes (N; 16A, 16B, 16C, 16D, 16E, 16F) with one another, different from the first sub-network (R1), implementing a second message transmission protocol, different from the first transmission protocol,
**characterized in that** this second protocol excludes any read/write access to the correspondence tables of the directories (18; 18A, 18B, 18C, 18D, 18E, 18F) during any passage in the corresponding nodes of a message passing through this second sub-network.
